# EUROPEAN PATENT SPECIFICATION

(11) **EP 2 132 457 B1**
(45) Date of publication and mention of the grant of the patent: **03.12.2014**
(21) Application number: 08718601.1
(22) Date of filing: 03.03.2008
(51) Int. Cl.: F16F 15/34

(54) **WHEEL BALANCE CLIP**
RADAUSWUCHTUNGSKLAMMER
BRIDE D'ÉQUILIBRAGE DE ROUE

(30) Priority: 02.03.2007 GB 0704085
(43) Date of publication of application: 16.12.2009
(73) Proprietor: Trax Jh Limited, Welshpool Powys SY21 7DF (GB)
(72) Inventor: HALLE, John, Powys SY21 7DF (GB)
(74) Representative: Gosnall, Toby
(86) International application number: PCT/GB2008/000736
(87) International publication number: WO 2008/107667

(56) References cited:
- DE-B- 1 087 030
- FR-A- 1 255 439
- US-A- 2 049 703
- US-A- 2 248 265
- US-A- 2 258 011
- US-A- 4 728 154

## Description

### Field of the Invention

The present invention relates to a wheel balance clip and related methods.

### Background of the Invention

Where a tyre fitted to a wheel (or indeed the wheel itself) is heavier at one side than the other an out-of-balance vibration can manifest during driving, which can cause noticeable vibration on the steering wheel, and through the car itself. This causes tyres and mechanical parts to wear more quickly and ultimately could render a vehicle unsafe. Wheel balance weights are used to correct out-of-balance defects on tyred wheels, and are arranged to attach to the rims of wheels used by vehicles such as cars, buses, trucks or the like.

Where a tyre or wheel rim is observed to be out-of-balance, a wheel balance weight of compensatory measure may be attached to the rim of the wheel diametrically opposite the heavier portion of the tire/wheel.

For some types of wheels, previous wheel balance weights have either been provided as complete assemblies, whereby a weight portion is cast around a clip to provide a consolidated assembly, or as a separate clip and weight portions, which arranged to be mechanically attached to one-another.

Such wheel balance weights are attached by means of an integral U-shaped spring that is arranged to open and close elastically upon the rim of the wheel to retain the clip in position. During their lifetime however as a vehicle accelerates and decelerates the wheel balance weights will experience forces acting either to encourage removal of the weights from the rim, and/or to encourage them to displace circumferentially around the rim. In each case this can lead to the failure of the countermeasure.

Another problem is that many current wheel balance clip designs are suitable only for wheels of an alloy construction. Because of the moulding process used to produce these wheels the wheel rims are limited to having a profile such that their distal ends are angled upwards or at least not downwards relative to an axis of the wheel. Steel wheels however can be manufactured such that the distal end of the wheel rim has a lip (angled to have a downward pointing profile). Indeed, the distal end of a steel rim is commonly rolled over in order to prevent sharp edges from contacting a tyre. Moreover, steel rims are fabricated from thinner material when compared to so-called alloy rims.

Also, as technology improves, the steel from which steel wheel rims are fabricated has gotten thinner. However, vehicles with older wheels still need new tyres and as such need their wheels to be balanced. Wheel balancing centres therefore have to fit balance weights to wheels being fabricated from materials of a variety of thicknesses.

This presents a problem in that, to be effective, a clip should be able to accommodate a variety of different gauge materials. If the opening in a clip is too narrow, then that clip can be damaged when it is attempted to fit it to a thicker rim. If the opening in a clip is too wide, then that clip can move around the rim, or fall off. If the clip moves from the position where it is required then the out of balance problem can be exacerbated when compared to having no balance weight present.

US 2 258 011 discloses a balance weight having a spring portion and an attachment portion and a weight attached to the attachment portion. The attachment portion is provided with spurs that dig into a rim of a wheel to which the balance weight is attached in use.

### Summary of the Invention

According to a first aspect of the invention there is provided a wheel balance clip in accordance with claim 1 of the appended claims.

Such an arrangement is believed to be advantageous, as the provision of a protrusion increases the stress in the spring portion when compared to a clip without a protrusion. The protrusion may also act to increase the pressure exerted by the attachment portion upon the rim, compared to a clip without a protrusion by providing a contact region of lesser area. In effect, the protrusion acts to aid retention of the clip.

The cambered upper region of the protrusion on the clip is believed to be advantageous, as this allows easier fitting of the clip to the rim of a wheel.

Advantageously, the protrusion interacts with the vertical face of the rim of a wheel when in use.

Thus, the protrusion may be thought of as being provided so as to increase the stress in the spring portion rather than to 'hook' onto the rim by means of a complimentary feature. This arrangement may be engineered by providing the protrusion so as it interacts with the outside face of the wheel rim.

The protrusion may be arranged to engage the flat surface of a wheel rim; i.e. the protrusion may be arranged not to require a groove or the like with which to interact. Such an arrangement is convenient as it allows the clip to be more universally used and/or does not require a rim to be modified before a clip can be mounted thereon.

In some embodiments, the clip is arranged such that, on a side of the wheel on which the clip is attached, in use, the clip is arranged to contact the wheel at substantially only the protrusion and at a region of the spring portion.

The protrusion may be formed from a deformed region of the face. Such an arrangement is believed to be advantageous, as this allows for easy manufacture. Alternatively the protrusion may be formed from an appendage, attached to the face. Such an arrangement may be advantageous in larger clips, where the force applied through the protrusion from the spring when in use may be too great and act to deform the face back to an original state.

The wheel balance clip may be provided with a plurality of protrusions. Such an arrangement may be advantageous as this may provide for localised areas of increased pressure and/or ensure that the clip is evenly stressed across its width.

The second face, generally opposing the face from which the protrusion extends, is arranged to mount a balance weight thereupon. The second face may have a substantially planar surface for ease of attaching the two. Such mounting may be by way of adhesive, such as by adhesive tape. Such an arrangement may be advantageous, as it would allow balance weights of various masses to be mounted. If an adhesive substance, such as adhesive tape were to be used it may be advantageous if the adhesive substance were to be capable of withstanding the temperature of an oven used when powder coating, dip coating or the like. Such an arrangement may be advantageous, as this would allow the wheel balance assembly to be powder-coated, or dip-coated after assembly.

Alternatively the attachment portion may be arranged to have a balance weight cast thereupon, whereby the protrusion extends beyond the surface of cast balance weight so as to still interact with a rim to which the clip is attached. In yet further alternative or additional embodiments, the weight may be mounted on the clip with a means other than adhesive or casting such as riveting, soldering, welding or the like.

The clip may be provided with protection against corrosion, and/or damage. The clip may be painted, electroplated, galvanised, zinc plated and/or dip or powder coated. The colour of the clip may be altered for example so that it conforms to the colour of the wheel to which the clip is to be attached.

The spring portion may be arranged to accommodate a steel wheel rim. A steel rim may generally be in the region of 1 to 3 mm in thickness and in particular may be 1.5 to 2.5mm in thickness. In contrast, a so-called alloy rim might typically be between 4mm and 5mm in thickness.

According to a second aspect of the invention there is provided a method of maintaining a wheel balance clip upon a rim of a wheel in accordance with claim 12 of the appended claims.

Any of the features discussed in relation to any of the aspects of the invention may be utilised in any of the other aspects of the invention.

### Brief description of the drawings

There now follows, by way of example only, a detailed description of embodiments of the present invention with reference to the accompanying drawings of which:
**Figure 1** shows a background example to set the invention into context;
**Figures 2a and 2b** show a first embodiment of the present invention;
**Figures 3a and 3b** show the first embodiment of the present invention with the weight portion attached by adhesive;
**Figure 4** shows a second embodiment of the present invention; and
**Figure 5** shows a side elevation of a further embodiment and a cross section of a wheel rim.

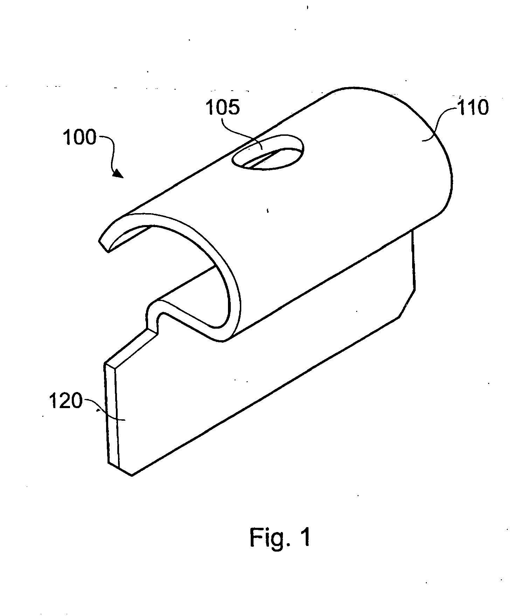

Figure 1 shows a wheel balance clip 100 (hereinafter termed clip). The clip 100 comprises a U shaped spring portion 110 and an attachment portion 120, depending from the spring portion 110. The U-shape of the spring portion 110 is provided to accommodate and attach the clip 100 to a rim of a wheel. The attachment portion 120 is arranged such that a wheel balance weight may be cast thereupon or attached thereto, thus providing a consolidated wheel balance weight assembly. Furthermore the spring portion 110 is provided with a cut-out region 105, arranged to accommodate a removal tool.

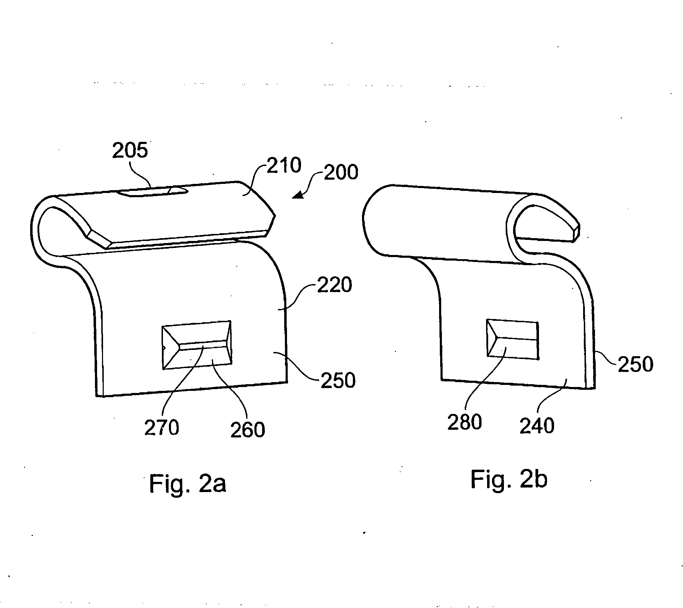

Figures 2a and 2b shows a first embodiment of the present invention wherein a clip 200 comprises a U-shaped spring portion 210 and an attachment portion 220, depending from the spring portion 210, wherein the spring portion 210 is provided with a cut-out region 205. The attachment portion 220 further comprises a face 250 and a second face 240, the second face 240 opposing the face 250.

In the present embodiment the second face 240 is arranged such that a wheel balance weight may be mounted thereupon, for example by adhesion, riveting, welding, etc. Where the wheel balance weight is adhesively mounted upon the second face, adhesive tape is used. The adhesive tape will generally be able to withstand the duration of exposure to temperatures used in a coating oven, such as those used in powder coating, dip coating or the like. In alternative embodiments the wheel balance weight may be arranged to be mounted upon the face 250 and the second face 250. In such an arrangement the wheel balance weight may be cast around the attachment portion 220. Should the balance weight be mounted using welding, then one or more projection welds may be used.

The face 250 is provided with a protrusion 260. The protrusion 260 is arranged to extend from the face 250. In this embodiment deforming a region of the attachment portion 220 forms the protrusion 260, such that the protrusion 260 on the face 250 has a complementary recess region 280 in the first face 240. In alternative embodiment the protrusion may be provided as an appendage. The appendage may be provided as a constituent component of the face 250, or as an additional component attached to the face 250. A person skilled in the art will readily understand how to implement such alternative arrangements.

In the present embodiment the protrusion 260 is formed as a generally oblong pyramidal shape. The protrusion 260 is also provided with a cambered upper surface region 270.

In the present embodiment the protrusion 260 is located in a central region of the face 250, although it will be readily appreciated that alternative configurations and locations of protrusion 260 may be used, and a person skilled in the art will be able to implement these. In addition, the protrusion 260 may extend for substantially the entire length and/or height of the face 250.

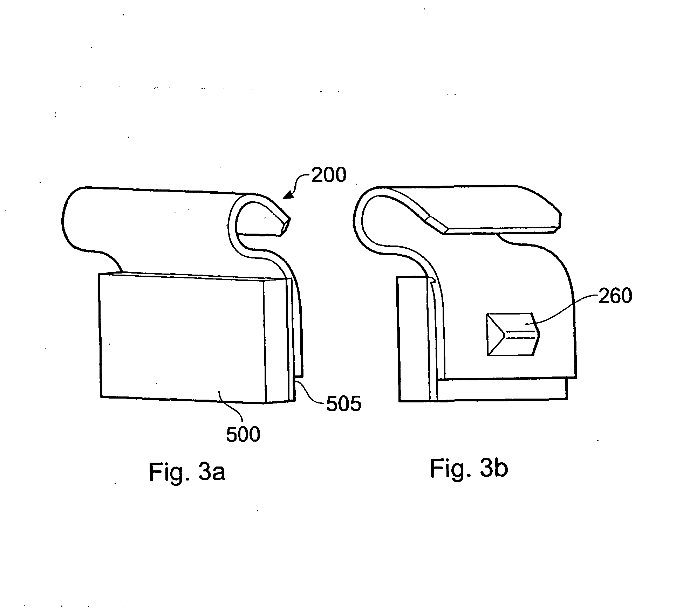

Figures 3a and 3b show one example of how the wheel balance clip 200 of the first embodiment may be used. In this figure the clip 200 is provided with an adhesive weight 500, mounted, via an adhesive connection 505 to the second face 240 of the attachment portion 220.

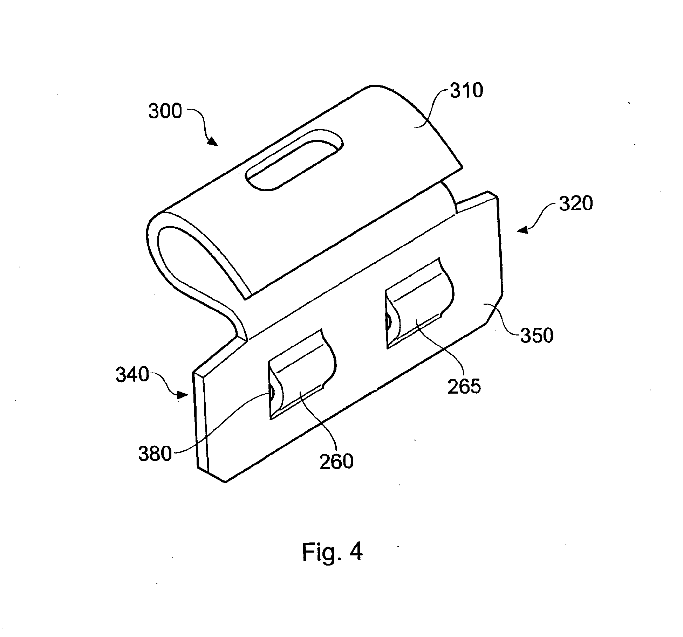

Figure 4 shows an alternative embodiment wherein a clip 300 is again provided with a spring portion 310 and an attachment portion 320 is again provided with a face 350 and second face 340. In this embodiment, the face 350 is provided with two protrusions 260, 265. Again in this embodiment deforming a region of the attachment portion 320 forms each protrusion 260, 265, and provides complementary recess regions (not shown) on the second face 340. In the present embodiment, each protrusion 260 is substantially arcuate in shape, which again provide a cambered upper surface region 270. While in the present embodiment each protrusion 260 is positioned along a common longitudinal axis of the second face 350, in alternative embodiments the protrusions 260 may occupy any number of further regions of the second face 250. In alternative embodiments the clip 300 may be provided with any number of protrusions 260, such as 3, 4, 10, 20, etc. or any number in between these.

It will be readily appreciated that the protrusions 260 of different clips 200, 300 may differ in size and shape. For example, in the arrangement where a wheel balance weight is cast around the attachment portion 220, 320 the clip 200, 300 may be provided with a protrusion 260 that is able to extend beyond the surface of the wheel balance weight, once it has been cast in place. In addition it will be readily appreciated that the spring portion 210, 310 need not be a U-shaped spring portion 210, 310, and may be any other form of spring portion 210, 310, arranged to retain the clip 200, 300 on the rim 400 of a wheel and that contacts the rim in two locations as previously described.

The clip 200, 300 of the present invention may be provided with a protective, or sacrificial coating such as a dip or powder coating, galvanisation, zinc plating or electroplating or the like in order to prevent corrosion (or a combination of these coatings). In the present embodiment the clip is electroplated or zinc plated, which may be dip or powder coating, wherein the dip or powder coating may be coloured.

The clip 100 may be manufactured from a single material such as: plastic, steel, lead, zinc, etc. or each portion of the clip 100 may be manufactured from a different material. While the present embodiment the clip is manufactured from steel, in an alternative embodiment the spring portion 110 may be provided by one material, while the attachment portion 120 and or the protrusions 160 may be provided by another material.

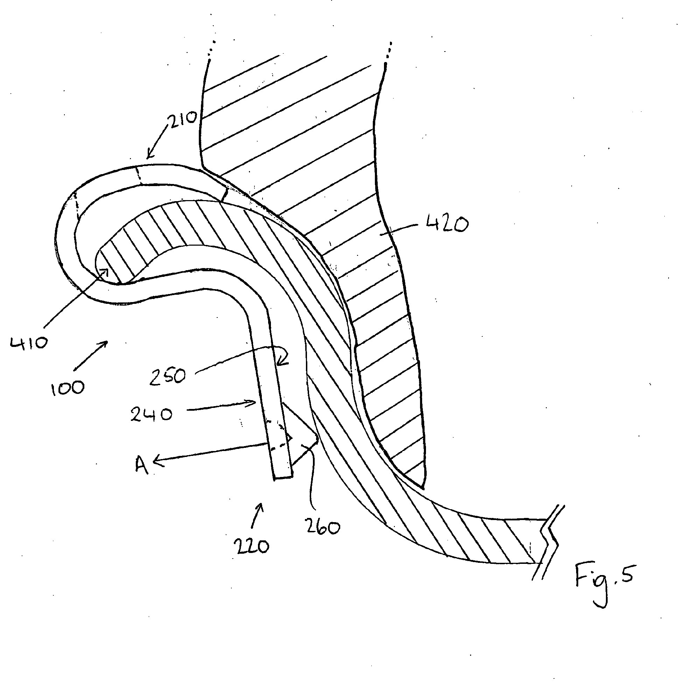

The embodiment shown in Figure 5 has features in common with the first and second embodiment and like parts are referred to with the same reference numerals.

Figure 5 shows that the U-shaped spring portion is placed over a rim 400 of a wheel. The protrusion 260 is arranged such that it interacts with the rim 400 of the wheel, and thus increases the stress in the spring portion 210. This interaction of the protrusion causes the face 250 of the clip to move away from the rim 400 in the direction of the arrow A in the Figure.

Advantageously the protrusion 260 creates a pivot point such that the distal end of the U-shaped spring portion is driven toward the top of the rim 400, facilitating retention of the clip when the protrusion is provided. It will be appreciated by those skilled in the art that this system is advantageous over clips without a protrusion, as the gripping force can be increased. The present arrangement is suitable for steel rims that have a lip (angled to have a downward pointing profile), but can also be used on wheel rims of different compositions and having differently angled profiles.

It can be seen that the wheel balance clip 100 is arranged such that, on a side of the wheel rim 400 on which the clip 100 is attached, in use, the clip 100 is arranged to contact the wheel rim 400 at substantially only the protrusion 260 and at a region of the spring portion 210. In the Figure, it can be seen that the end region of the wheel rim 400 contacts the spring portion 210 and that the face 250 does not substantially contact the wheel rim 400.

Also, this Figure shows how the distal end region 410 of the wheel rim 400 is rolled over, as would typically be the case with a wheel rim fabricated from steel, in order to help prevent a tyre wall 420 (shown schematically in place on the rim 400) from being damaged as the tyre is fitted to the rim 400, to ease fitment of a tyre and also to help strengthen the rim 400.

## Claims

1. A wheel balance clip (100) comprising:
a spring portion (110) arranged to accommodate and attach to the rim (400) of a wheel; and
an attachment portion (120) depending from the spring portion (110), wherein the attachment portion (120) having a face (250) and a second face (240) wherein a balance weight (500) is attached to the second face (240), and wherein the face (250) is provided with at least one protrusion (260) having a principal dimension, arranged such that, when in use, the at least one protrusion (260) interacts with the rim of a wheel on which it is fitted so as to aid the retention of the clip (100) such that the protrusion (260) causes the face of the clip (250) to move away from the rim **characterised in that** the principal dimension of the at least one protrusion (260) is substantially parallel to a normal vector to a plane of symmetry of the spring portion (110) and/or is substantially parallel to a tangent of a radius of a wheel to which the clip (100) is, in use, fitted and wherein the or each protrusion has an upper region (270) which is substantially cambered.

2. A wheel balance clip (100) according to claim 1, further comprising at least one of the following features:
i) wherein the, or each protrusion (260) is arranged, in use, to interact with the vertical face of the rim (400) of a wheel;
ii) wherein the, or each protrusion (260) is arranged to engage a flat surface of a wheel rim (400);
iii) wherein the, or each protrusion (260) is provided so as to interact with the outside face of the wheel rim (400).

3. A wheel balance clip (100) according to claim 1 or claim 2, wherein: the protrusion (260) is formed from a deformed region of the attachment portion (120); and additionally or alternatively the protrusion (260) is formed from an appendage, attached to the face (250).

4. A wheel balance clip (100) according to any preceding claim, comprising more than one protrusion (260).

5. A wheel balance clip (100) according to any preceding claim which is arranged so as to have a wheel balance weight (500) adhesively mounted thereupon.

6. A wheel balance clip (100) according to any of the claims 1 to 4; wherein the attachment portion (120) is arranged to have a balance weight (500) cast thereupon and the, or each protrusion (260) is arranged to extend beyond the surface of the cast balance weight (500).

7. A wheel balance clip (100) according to any of the claims 1 to 4, wherein the attachment portion (120) is arranged to have a balance weight (500) riveted, or welded thereupon.

8. A wheel balance clip (100) according to any preceding claim wherein the clip (100) is protected by any one of the following: dip coating, powder coating, paint, electroplate, zinc plating, and galvanisation; or alternatively wherein the clip (100) is protected by a first layer of zinc plating, and a second layer of powder coating.

9. A wheel balance assembly comprising a balance weight (500) and a clip (100) according to any of the claims 1 to 8.

10. A method of maintaining a wheel balance clip (100) upon a rim (400) of a wheel, comprising the steps of:
providing a clip (100) comprising a spring portion (110), and an attachment portion (120) depending therefrom, the attachment portion (120) having a face (250) and a second face (240) with a balance weight (500) attached thereto, the face (250)being provided with at least one protrusion (260) having a principal dimension;
attaching the clip (100) to a rim (400) such that the protrusion (260) interacts with the rim (400) upon which the clip (100) is fitted such that the interaction of the protrusion (260) with the rim (400) tends to force the face (250) of the attachment portion (120) away from the rim, **characterised in that** the principal dimension of the at least one protrusion (260) is substantially parallel to a normal vector to a plane of symmetry of the spring portion (110) and/or is substantially parallel to a tangent of a radius of a wheel to which the clip (100) is, in use, fitted and wherein the or each protrusion has an upper region (270) which is substantially cambered.

11. A method according to claim 10, further comprising at least one of the following features:
i) wherein the protrusion (260) is provided so as to interact, in use, with the outside face of the wheel rim (400);
ii) wherein the protrusion (260) interacts, in use, with the vertical face of the rim (400) of a wheel;
iii) wherein the protrusion (260) is provided by deforming a region of the attachment portion (120);
iv) wherein the protrusion (260) is provided from an appendage, attached to the face (250);
v) wherein more than one protrusion (260) is provided.

12. A combination of a wheel balance clip (100) according to any of claims 1 to 8 mounted on a wheel.

## Patentansprüche

1. Radauswuchtungsklammer (100), die Folgendes beinhaltet:
einen Federabschnitt (110), der angeordnet ist, um die Felge eines Rades (400) aufzunehmen und an dieser angeschlossen zu werden; und
einen Anschlussabschnitt (120), der vom Federabschnitt (110) abhängig ist, wobei der Anschlussabschnitt (120) eine Fläche (250) und eine zweite Fläche (240) besitzt, wobei ein Auswuchtungsgewicht (500) an der zweiten Fläche (240) angeschlossen ist, und wobei die Fläche (250) mit mindestens einem Vorsprung (260) mit einer grundsätzlichen Abmessung versehen ist, so angeordnet, dass, beim Gebrauch, der mindestens eine Vorsprung (260) mit der Felge eines Rades, an der er angebracht ist, interagiert, um die Zurückhaltung der Klammer (100) zu unterstützen, so dass der Vorsprung (260) bewirkt, dass sich die Fläche der Klammer (250) von der Felge weg bewegt, **dadurch gekennzeichnet, dass** die grundsätzliche Abmessung des mindestens einen Vorsprungs (260) im Wesentlichen parallel zu einem normalen Vektor zu einer Symmetrieebene des Federabschnitts (110) ist und/oder im Wesentlichen parallel zu einer Tangente eines Radius eines Rades ist, an dem die Klammer (100), beim Gebrauch, angebracht ist, wobei der oder jeder Vorsprung eine obere Region (270) besitzt, die im Wesentlichen gewölbt ist.

2. Radauswuchtungsklammer (100) gemäß Anspruch 1, die ferner mindestens eines der folgenden Merkmale beinhaltet:
i) wobei der oder jeder Vorsprung (260) angeordnet ist, beim Gebrauch, um mit der vertikalen Fläche der Felge (400) eines Rades zu interagieren;
ii) wobei der oder jeder Vorsprung (260) angeordnet ist, um in eine flache Oberfläche einer Radfelge (400) einzugreifen;
iii) wobei der oder jeder Vorsprung (260) bereitgestellt ist, um mit der Außenfläche der Radfelge (400) zu interagieren.

3. Radauswuchtungsklammer (100) gemäß Anspruch 1 oder Anspruch 2, wobei: der Vorsprung (260) aus einer verformten Region des Anschlussabschnitts (120) ausgebildet ist; und zusätzlich oder alternativ der Vorsprung (260) aus einem Ansatz, angebracht an der Fläche (250), ausgebildet ist.

4. Radauswuchtungsklammer (100) gemäß einem der vorhergehenden Ansprüche, die mehr als einen Vorsprung (260) beinhaltet.

5. Radauswuchtungsklammer (100) gemäß einem der vorhergehenden Ansprüche, die so angeordnet ist, dass sie ein Radauswuchtungsgewicht (500) besitzt, das darauf klebend montiert ist.

6. Radauswuchtungsklammer (100) gemäß einem der Ansprüche 1 bis 4, wobei der Anschlussabschnitt (120) so angeordnet ist, dass er ein Auswuchtungsgewicht (500) besitzt, das darauf angegossen ist, oder jeder Vorsprung (260) so angeordnet ist, dass er sich über die Oberfläche des angegossenen Auswuchtungsgewichts (500) hinaus erstreckt.

7. Radauswuchtungsklammer (100) gemäß einem der Ansprüche 1 bis 4, wobei der Anschlussabschnitt (120) so angeordnet ist, dass er ein Auswuchtungsgewicht (500) besitzt, das darauf angenietet oder angeschweißt ist.

8. Radauswuchtungsklammer (100) gemäß einem der vorhergehenden Ansprüche, wobei die Klammer (100) durch eines der Folgenden geschützt ist: Tauchbeschichtung, Pulverbeschichtung, Lackierung, Elektroplattierung, Verzinkung und Galvanisierung; oder alternativ wobei die Klammer (100) durch eine erste Schicht Verzinkung und eine zweite Schicht Pulverbeschichtung geschützt ist.

9. Radauswuchtungsanordnung, die ein Auswuchtungsgewicht (500) und eine Klammer (100) gemäß einem der Ansprüche 1 bis 8 beinhaltet.

10. Verfahren im Aufrechterhalten einer Radauswuchtungsklammer (100) auf einer Felge (400) eines Rades, das die folgenden Schritte beinhaltet:
Bereitstellen einer Klammer (100), die einen Federabschnitt (110) und einen Anschlussabschnitt (120), der davon abhängig ist, beinhaltet, wobei der Anschlussabschnitt (120) eine Fläche (250) und eine zweite Fläche (240) mit einem daran angebrachten Auswuchtungsgewicht (500) besitzt, wobei die Fläche (250) mit mindestens einem Vorsprung (260) mit einer grundsätzlichen Abmessung versehen ist;
Anschließen der Klammer (100) an einer Felge (400), so dass der Vorsprung (260) mit der Felge (400) interagiert, auf der die Klammer (100) angebracht ist, so dass die Interaktion des Vorsprung (260) mit der Felge (400) dazu tendiert, die Fläche (250) des Anschlussabschnitts (120) von der Felge weg zu drängen, **dadurch gekennzeichnet, dass** die grundsätzliche Abmessung des mindestens einen Vorsprungs (260) im Wesentlichen parallel zu einem normalen Vektor zu einer Symmetrieebene des Federabschnitts (110) ist und/oder im Wesentlichen parallel zu einer Tangente eines Radius eines Rades ist, an dem die Klammer (100), beim Gebrauch, angebracht ist, wobei der oder jeder Vorsprung eine obere Region (270) besitzt, die im Wesentlichen gewölbt ist.

11. Verfahren gemäß Anspruch 10, das ferner mindestens eines der folgenden Merkmale beinhaltet:
i) wobei der Vorsprung (260) bereitgestellt wird, um, beim Gebrauch, mit der Außenfläche der Radfelge (400) zu interagieren;
ii) wobei der Vorsprung (260), beim Gebrauch, mit der vertikalen Fläche der Felge (400) eines Rades interagiert;
iii) wobei der Vorsprung (260) durch Verformen einer Region des Anschlussabschnitts (120) bereitgestellt wird;
iv) wobei der Vorsprung (260) aus einem Ansatz, angebracht an der Fläche (250), bereitgestellt wird;
v) wobei mehr als ein Vorsprung (260) bereitgestellt wird.

12. Kombination einer auf einem Rad montierten Radauswuchtungsklammer (100) gemäß einem der Ansprüche 1 bis 8.

## Revendications

1. Une bride d'équilibrage de roue (100) comprenant :
une partie ressort (110) agencée de façon à recevoir et se fixer à la jante (400) d'une roue, et
une partie de fixation (120) solidaire de la partie ressort (110), où la partie de fixation (120) possède une face (250) et une deuxième face (240), où une masse d'équilibrage (500) est fixée à la deuxième face (240), et où la face (250) est munie d'au moins une saillie (260) possédant une dimension principale, agencée de sorte que, lorsqu'elle est en utilisation, la au moins une saillie (260) interagit avec la jante d'une roue sur laquelle elle est placée de façon à favoriser la retenue de la bride (100), de sorte que la saillie (260) amène la face de la bride (250) à s'écarter de la jante, **caractérisée en ce que** la dimension principale de la au moins une saillie (260) est sensiblement parallèle à un vecteur perpendiculaire à un plan de symétrie de la partie ressort (110) et/ou est sensiblement parallèle à une tangente d'un rayon d'une roue à laquelle la bride (100) est, en utilisation, fixée, et où la ou chaque saillie possède une zone supérieure (270) qui est sensiblement cambrée.

2. Une bride d'équilibrage de roue (100) selon la Revendication 1, comprenant en outre au moins une des caractéristiques suivantes :
i) où la ou chaque saillie (260) est agencée, en utilisation, de façon à interagir avec la face verticale de la jante (400) d'une roue,
ii) où la ou chaque saillie (260) est agencée de façon à entrer en prise avec une surface plane d'une jante de roue (400),
iii) où la ou chaque saillie (260) est placée de façon à interagir avec la face extérieure de la jante de roue (400).

3. Une bride d'équilibrage de roue (100) selon la Revendication 1 ou 2, où : la saillie (260) est formée à partir d'une zone déformée de la partie de fixation (120), et additionnellement ou en variante, la saillie (260) est formée à partir d'un appendice fixé à la face (250).

4. Une bride d'équilibrage de roue (100) selon l'une quelconque des Revendications précédentes comprenant plus d'une saillie (260).

5. Une bride d'équilibrage de roue (100) selon l'une quelconque des Revendications précédentes qui est agencée de façon à posséder une masse d'équilibrage de roue (500) montée de manière adhésive sur celle-ci.

6. Une bride d'équilibrage de roue (100) selon l'une quelconque des Revendications 1 à 4 où la partie de fixation (120) est agencée de façon à posséder une masse d'équilibrage (500) coulée sur celle-ci et la ou chaque saillie (260) est agencée de façon à s'étendre au-delà de la surface de la masse d'équilibrage coulée (500).

7. Une bride d'équilibrage de roue (100) selon l'une quelconque des Revendications 1 à 4, où la partie de fixation (120) est agencée de façon à posséder une masse d'équilibrage (500) rivetée ou soudée sur celle-ci.

8. Une bride d'équilibrage de roue (100) selon l'une quelconque des Revendications précédentes où la bride (100) est protégée par l'une quelconque des opérations suivantes : revêtement par trempage, revêtement de poudre, peinture, électroplaquage, plaquage à base de zinc et galvanisation, ou en variante, où la bride (100) est protégée par une première couche de plaquage à base de zinc et une deuxième couche de revêtement de poudre.

9. Un ensemble d'équilibrage de roue comprenant une masse d'équilibrage (500) et une bride (100) selon l'une quelconque des Revendications 1 à 8.

10. Un procédé de maintien d'une bride d'équilibrage de roue (100) sur une jante (400) d'une roue, comprenant les opérations suivantes :
la fourniture d'une bride (100) comprenant une partie ressort (110) et une partie de fixation (120) solidaire de celle-ci, la partie de fixation (120) possédant une face (250) et une deuxième face (240) avec une masse d'équilibrage (500) fixée à celle-ci, la face (250) étant munie d'au moins une saillie (260) possédant une dimension principale,
la fixation de la bride (100) à une jante (400) de sorte que la saillie (260) interagisse avec la jante (400) sur laquelle la bride (100) est placée de sorte que l'interaction de la saillie (260) avec la jante (400) tende à forcer la face (250) de la partie de fixation (120) à l'écart de la jante, **caractérisée en ce que** la dimension principale de la au moins une saillie (260) est sensiblement parallèle à un vecteur perpendiculaire à un plan de symétrie de la partie ressort (110) et/ou est sensiblement parallèle à une tangente d'un rayon d'une roue à laquelle la bride (100) est, en utilisation, fixée et où la ou chaque saillie possède une zone supérieure (270) qui est sensiblement cambrée.

11. Un procédé selon la Revendication 10 comprenant en outre au moins une des caractéristiques suivantes :
i) où la saillie (260) est fournie de façon à interagir, en utilisation, avec la face extérieure de la jante de roue (400),
ii) où la saillie (260) interagit, en utilisation, avec la face verticale de la jante (400) d'une roue,
iii) où la saillie (260) est fournie par la déformation d'une zone de la partie de fixation (120),
iv) où la saillie (260) est fournie à partir d'un appendice fixé à la face (250),
v) où plus d'une saillie (260) est fournie.

12. Une combinaison d'une bride d'équilibrage de roue (100) selon l'une quelconque des Revendications 1 à 8 montée sur une roue.
